# EUROPEAN PATENT APPLICATION

(11) **EP 4 625 995 A1**
(43) Date of publication of application: **01.10.2025**
(21) Application number: 25166791.1
(22) Date of filing: 27.03.2025
(51) Int. Cl.: H04N 21/231, H04N 21/47

(54) **MANAGEMENT DEVICE, MANAGEMENT METHOD, AND PROGRAM**

(30) Priority: 29.03.2024 JP 2024056331
(71) Applicant: Rakuten Group, Inc., Setagaya-ku Tokyo 158-0094 (JP)
(72) Inventor: ATOBE, Nobumichi, Tokyo, 158-0094 (JP); SAITO, Yutaka, Tokyo, 158-0094 (JP); YUMOTO, Kota, Tokyo, 158-0094 (JP); CHALLANI, Mayur, Tokyo, 158-0094 (JP); OKI, Koji, Tokyo, 158-0094 (JP); SASAKI, Tomo, Tokyo, 158-0094 (JP); INABA, Hisato, Tokyo, 158-0094 (JP); NAKANISHI, Shu, Tokyo, 158-0094 (JP); HORIGUCHI, Tomoya, Tokyo, 158-0094 (JP)
(74) Representative: EIP

(57) **Abstract**

A management device (100) that manages a video file obtained by recording a live-streamed video moves, in a case in which the video file is stored in a first storage (500) and, thereafter, a request from a user is not received within a predetermined period, the video file to a second storage (600) different than the first storage (500); and estimates a change in a future request from the user for the video file after moving the video file to the second storage (600). Then, the management device (100) determines, based on respective management costs of the first storage (500) second storage (600) identified from the change in the future request, whether to store the video file in the first storage (500); and, based on results of the determination, stores the video file in the first storage (500) again. Although a storage cost of the video file is higher for the first storage (500) than for the second storage (600), a communication cost for the first storage (500) is superior to that of the second storage (600).

## Description

This application relates generally to a management device, a management method, and a program.

In the related art, a variety of video distribution services for live-streaming video and audio are provided. For example, Unexamined Japanese Patent Application Publication No. 2004-274531 describes a video distribution system that enables, by a remote operation, the live-streaming of video and audio from a streaming server and, immediately thereafter, the distribution of recorded content.

However, this system does not sufficiently manage video files to be distributed while taking storage cost into account.

The present disclosure is made with the view of the above situation, and an objective of the present disclosure is to provide a management device, a content provision method, and a program capable of flexibly managing video files to be distributed while taking storage cost into account.

A management device according to a first aspect of the present disclosure is a management device that manages a video file obtained by recording a live-streamed video, the management device including:
a mover to move, in a case in which the video file is stored in a first storage and, thereafter, a request from a user is not received within a predetermined period, the video file to a second storage different than the first storage;
a request estimator to estimate a change in a future request from the user for the video file after the video file is moved to the second storage by the mover;
a determiner to determine, based on respective management costs of the first storage and the second storage identified from the change in the future request from the user for the video file estimated by the request estimator, whether to store the video file in the first storage; and
a manager to, based on results of the determination by the determiner, store the video file in the first storage again, wherein
although a storage cost of the video file is higher for the first storage than for the second storage, a communication cost for the first storage is superior to that of the second storage.

According to the present disclosure, it is possible to provide a management device, a management method, and a program capable of flexibly managing video files to be distributed while taking storage cost into account.

A more complete understanding of this application can be obtained when the following detailed description is considered in conjunction with the following drawings, in which:
FIG. 1 is a drawing illustrating the relationship between a management device, an information terminal, a streaming server, a first storage server, and a second storage server;
FIG. 2 is a block diagram illustrating an example of the management device;
FIG. 3 is a block diagram illustrating an example of the streaming server;
FIG. 4 is an explanatory drawing illustrating an example of changes in a number of requests of a content A;
FIG. 5 is a flowchart illustrating an example of content management processing;
FIG. 6 is a flowchart illustrating an example of storage switching processing; and
FIG. 7 is an explanatory drawing illustrating an example of changes in the number of requests of a content B.

### Overall Configuration

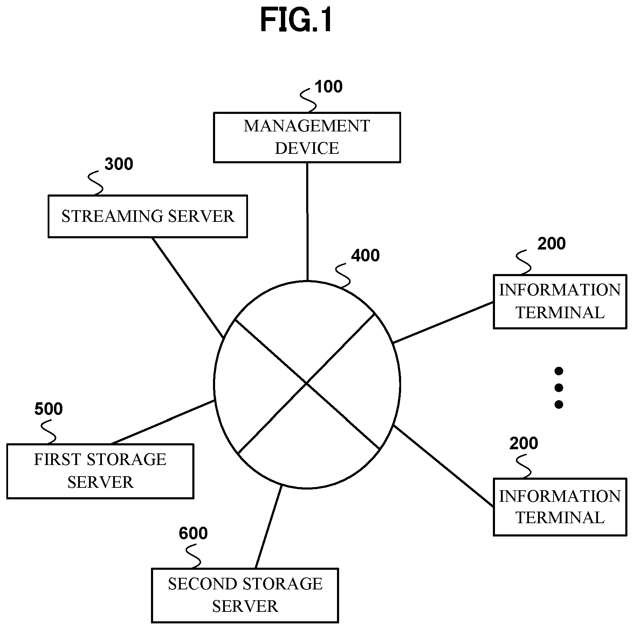

A management device, a management method, and a program according to various embodiments of the present disclosure are described in detail while referencing the drawings. Note that, in the drawings, identical or corresponding components are denoted with the same reference numerals. As illustrated in FIG. 1, a management device 100 according to some embodiments of the present disclosure is communicably connected to an information terminal 200, a streaming server 300, a first storage server 500, and a second storage server 600 across a computer communication network 400 such as the internet or the like.

The management device 100 is implemented as a computer such as a server or the like. The management device 100 has a feature for performing switching of the servers on which video files to be distributed are stored. Specifically, the management device 100 has a feature for copying a video file stored in the first storage server 500 to the second storage server 600, and deleting that video file from the first storage server 500. The management device 100 also has a feature for copying, to the first storage server 500, the video file copied to the second storage server 600. Note that the video files to be distributed are, for example, video files of sports, music, or the like. The videos are live-streamed from the streaming server 300 in real time, and are stored in the first storage server 500. In the embodiments, these stored files are called "video files to be distributed."

The information terminal 200 is an information terminal (a so-called computer) such as a smartphone, a tablet, or a personal computer (PC) owned by a user that views the videos. The information terminal 200 sends, in response to an operation of the user that desires video distribution, a request for a desired video to the streaming server 300 via the computer communication network 400 and, as a result, the desired video is distributed.

The streaming server 300 is a server that performs streaming distribution of the video in correspondence with the request from the user. Here, the phrase "request from the user" refers to a request sent from the information terminal 200 in response to the operation of the user. The streaming server 300 has a function for distributing the videos to be distributed to the information terminal 200 via the computer communication network 400. The streaming server 300 can be accessed simultaneously by thousands to tens of thousands of viewers. Note that, while not illustrated in the drawings, in order to reduce the load on the streaming server 300, a plurality of streaming servers 300 may be disposed, and users that are viewers may be caused to access the nearest streaming server 300. As described above, the streaming server 300 also has a function for distributing live videos. Storing all of the live videos in the streaming server 300 would result in an enormous amount of data and is not suitable and, as such, the live videos are, as described above, saved on the first storage server 500 as the video files to be distributed. Specifically, in addition to the function for distributing live videos, the streaming server 300 has a function for distributing, to the information terminal 200 via the computer communication network 400, the video files to be distributed stored in the first storage server 500 and the second storage server 600.

The first storage server 500 is a server in which live videos being distributed by the streaming server 300 are stored as the video files to be distributed. Although the first storage server 500 has higher storage costs for the video files to be distributed than the hereinafter described second storage server 600, the first storage server 500 can handle large communication loads, and demonstrates fast communication speed. In one example, the first storage server 500 corresponds to the hot storage described at the following URL: (https://azure.microsoft.com/jajp/pricing/details/storage/blobs/#pricing). As such, the first storage server 500 is suitable for storing video files for which there are many requests from users. Note that, in the drawings, an example is illustrated in which one first storage server 500 is provided, but a configuration is possible in which a plurality of first storage servers 500 is provided. Additionally, the first storage server 500 is not subjected to additional fees at times of heavy access. However, the second storage server 600 is subjected to additional fess at times of heavy access. The management costs may include at least a storage cost and a communication (transmission) cost. The storage cost may include a fee corresponding to the volume of video files to be distributed, and the communication cost may include "fees related to (the inverse of) the communication speed" and "fees related to the communication (read/write) volume." Although the first storage server 500 has a higher storage cost than the hereinafter described second storage server 600, the first storage server 500 has a lower communication cost. Thus, the first storage server 500 is a storage server for which the management costs are low when storing video files for which there are many requests from users.

Similar to the first storage server 500, the second storage server 600 is a server on which the video files to be distributed are stored. Although the second storage server 600 has a lower storage cost for the video files to be distributed than the first storage server 500, the second storage server 600 cannot handle large communication loads and has slow communication speed. Moreover, if the second storage server 600 is configured so as to be able to handle a large communication load and/or have fast communication speed, the cost of the second storage server 600 would exceed the cost of the first storage server 500. The transmission (data playback) cost for the second storage server 600 is set higher than that of the first storage server 500. As such, the second storage server 600 is suitable for storing video files for which there are few requests from users. In one example, the second storage server 600 corresponds to the cold storage described at the aforementioned URL. In this embodiment, when 30 days have elapsed since the last request from a user, the corresponding video file to be distributed stored in the first storage server 500 is moved to the second storage server 600 by the management device 100. Note that, in the drawings, an example is illustrated in which one second storage server 600 is provided, but a configuration is possible in which a plurality of second storage servers 600 is provided. Moreover, although the second storage server 600 has a lower storage cost than first storage server 500, the second storage server 600 has a higher communication cost. As a result, the second storage server 600 is a storage server for which the management costs are low when storing video files for which there are few requests from users.

Fundamentally, storing content for which a data playback frequency is not high on the second storage server 600 results in lower costs, but when a data playback time per month exceeds a predetermined threshold, storing such content on the second storage server 600 results in higher costs.

### Functional Configuration of Management Device

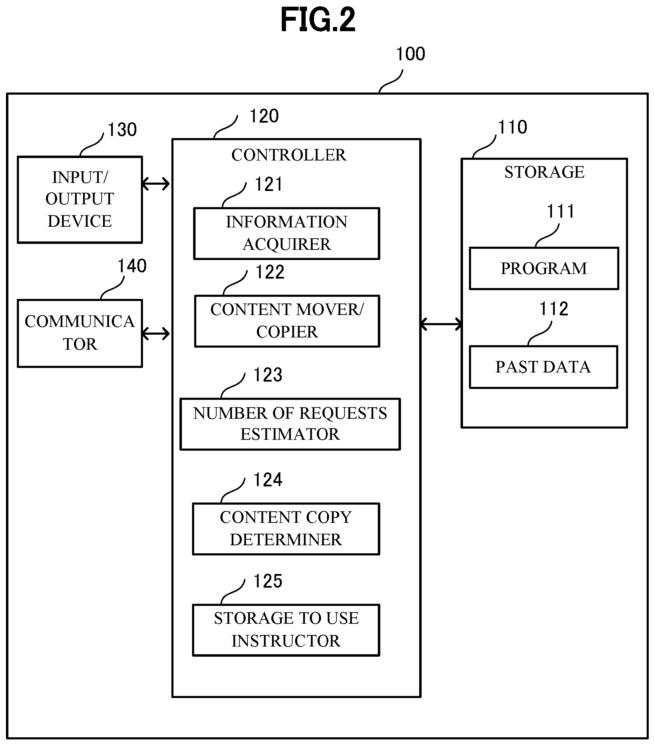

Next, the configuration of the management device 100 is described while referencing FIG. 2.

As illustrated in FIG. 2, the management device 100 includes a storage 110, a controller 120, an input/output device 130, a communicator 140, and a system bus (not illustrated in the drawing) that connects these components to each other.

The storage 110 includes read-only memory (ROM), random access memory (RAM), and the like. The ROM stores a program 111 executed by the controller 120, various types of data (not illustrated in the drawing) required in advance to execute the program 111, and past data 112.

The program 111 is a program for executing hereinafter described content management processing, and is stored in advance in the storage 110.

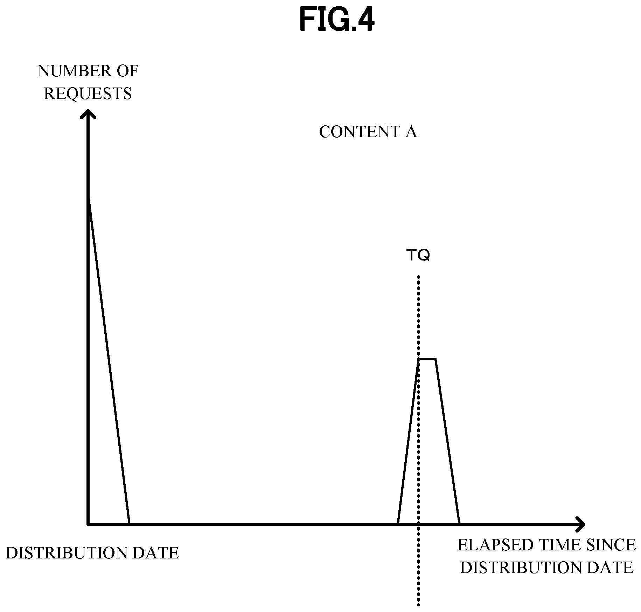

The past data 112 is data that expresses, for every video file to be distributed (that is, for each of the contents), changes in the number of requests from users. FIG. 4 is an example of a graph created on the basis of the past data 112, and illustrates an example of the changes in the number of requests of a content A. The past data 112 is stored in the storage 110 as a result of information (viewing information 313) about requests from users to the streaming server 300 being acquired from the streaming server 300 by the function of a hereinafter described information acquirer 121. Details are described later, but the management device 100 of this embodiment has functions for estimating a future number of requests from users on the basis of the past data 112, determining which of the first storage server 500 and the second storage server 600 is suitable as a storage destination of each of the video files to be distributed, and instructing the streaming server 300 about the storage server to use. FIG. 4 illustrates an example of a case in which the number of requests of the content A gradually decreases from the streaming date of the live video and, after reaching "0", the number of requests suddenly increases. The past data 112 corresponds to a past request situation.

The controller 120 includes a central processing unit (CPU), an application specific integrated circuit (ASIC), and the like. The controller 120 operates in accordance with the program 111 stored in the storage 110, and executes processings according to the program 111. The controller 120 includes, as main functional components provided by the program 111 stored in the storage 110, an information acquirer 121, a content mover/copier 122, a number of requests estimator 123, a content copy determiner 124, and a storage to use instructor 125.

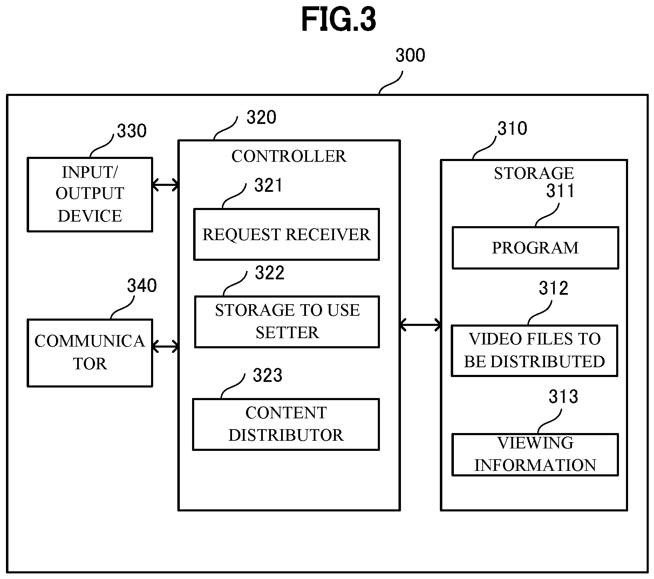

The information acquirer 121 is a functional component that acquires, from the streaming server 300, a request situation for video distribution from users. Specifically, the information acquirer 121 is a functional component that acquires, from the streaming server 300, viewing information 313 (see FIG. 3) expressing the request situation for every video file to be distributed, or, in other words, for each content, and stores the acquired viewing information 313 in the storage 110 as the past data 112. The information acquirer 121 counts the number of requests for each content on the basis of the acquired viewing information 313, and stores change data of the number of requests for each content, which serves as the basis of the graph illustrated in FIG. 4, in the storage 110 as the past data 112.

The content mover/copier 122 is a functional component that has a function for moving the video files to be distributed from the first storage server 500 to the second storage server 600, and a function for copying the video files to be distributed, moved to the second storage server 600, to the first storage server 500. Specifically, the content mover/copier 122 has a function for moving, to the second storage server 600, content (video files to be distributed) for which there have been no requests from any users even though 30 days have elapsed from a last request. Additionally, the content mover/copier 122 has a function of copying the content (video files to be distributed) from the second storage server 600 to the first storage server 500 when a determination is made, by a function of the hereinafter described content copy determiner 124, that the content should be moved from the second storage server 600 to the first content server 500, that is, a determination is made that managing the content in the first storage server 500 results in lower management costs. Note that the content mover/copier 122 also has a function for deleting, among the video files to be distributed stored in the first storage server 500, the video files to be distributed stored for backup when 30 days have elapsed since the streaming date of the live video. That is, the content mover/copier 122 has a function for deleting one of the two stored video files to be distributed. Note that the video files to be distributed stored for backup may be stored in any of the plurality of first storage servers 500. Additionally, note that a keyword related to content of an operation may be linked to each of the video files.

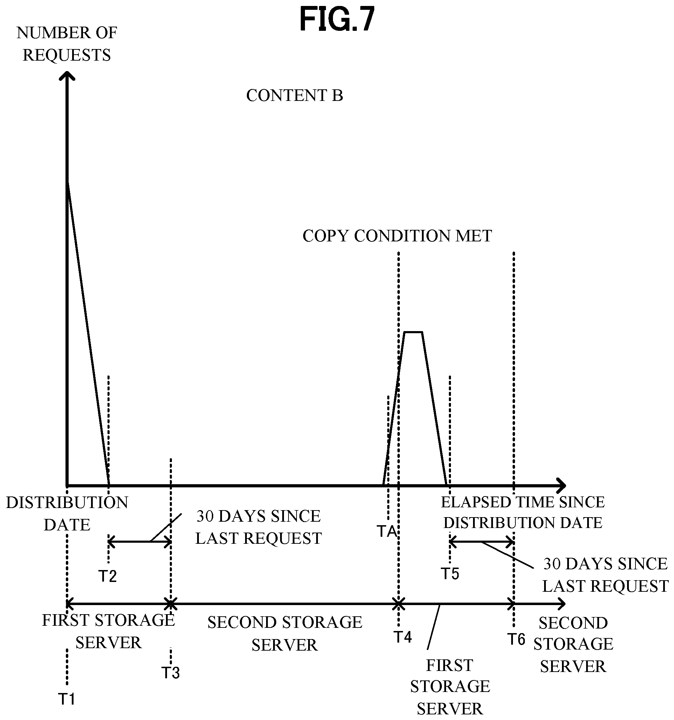

The number of requests estimator 123 is a functional component that performs estimation of the future number of requests on the basis of the request situation of each content acquired by the information acquirer 121. Specifically, when a request condition such as "the number of requests has suddenly increased" or the like is met, the number of requests estimator 123 identifies, from the past data 112, data that changes in a manner similar to the request situation of a target content, among the request situation of each content acquired by the information acquirer 121, and performs the estimation of the future number of requests. Note that the number of requests estimator 123 performs the estimation of the future number of requests on the basis of the past data 112 corresponding to content of the same genre as the video file to be distributed. When, in the request situation for each content acquired by the function of the information acquirer 121, a sudden increase in the number of requests of a content B at a timing TA is expressed as illustrated in FIG. 7, for example, the number of requests estimator 123 determines that the request condition is met. Then, the number of requests estimator 123 determines that the change of the content B is similar to the change of the content A illustrated in FIG. 4, and estimates that the number of requests of the content B will change after the timing TA as illustrated in FIG. 7. Note that the content A and the content B are both assumed to be video files of soccer matches, and belong to a common genre. However, a configuration is possible in which the number of requests estimator 123 selects past data 112 that has a similar change using a general genre such as "sports" as the common genre in addition to the specific sport genre of "soccer." Note also that the request condition is a condition based on, for example, the number of requests per predetermined time. The request condition can be set as desired. For example, the request condition can be set to five or more or ten or more requests within one-hour.

The content copy determiner 124 is a functional component that determines whether a content should be copied from the second storage server 600 to the first storage server 500. Specifically, the content copy determiner 124 determines whether the change in the future number of requests of the number of requests estimator 123 meets a copy condition indicating that the content should be copied from the second storage server 600 to the first storage server 500 and, when the content copy determiner 124 determines that the copy condition is met, determines that the content should be copied from the second storage server 600 to the first storage server 500. The copy condition is a condition that is met when the management costs resulting from management by the first storage server 500 are lower than the management costs resulting from management by second storage server 600, and it is sufficient that the determination of whether the copy condition is met is performed on the basis of the change in the future number of requests of the number of requests estimator 123. The change in the future number of requests of the number of requests estimator 123 is estimated on the basis of the past data 112 that has a similar change. As such, according to the change in the past data 112, as with the changes in the future number of requests of the video files to be distributed, there are cases in which management by the second storage server 600 results in lower management costs, and cases in which management by the first storage server 500 results in lower management costs. Thus, the content copy determiner 124 determines, in light of the situation of the past data 112, that the copy condition is met in cases in which management by the first storage server 500 results in lower management costs. Note that the graph based on the past data 112 of the content A illustrated in FIG. 4 illustrates an example in which, in a predetermined period after a timing TQ, management by the first storage server 500 results in lower management costs.

The storage to use instructor 125 is a functional component that instructs the streaming server 300 about the storage server that should be used for video distribution. Specifically, the storage to use instructor 125 is a functional component that instructs the streaming server 300 about the storage server to use, that is, whether the video file stored in the first storage server 500 is to be distributed or the video file stored in the second storage server 600 is to be distributed. On the streaming server 300 side, the video file of the storage server based on the instruction of the storage to use instructor 125 is distributed.

The input/output device 130 is a device that includes a keyboard, a mouse, a camera, a microphone, a liquid crystal display, an organic electro luminescence (EL) display, or the like, and is for inputting and outputting of various types of data.

The communicator 140 is a device that the management device 100 uses to communicate across the computer communication network 400 with other information terminals such as the information terminal 200, the streaming server 300, the first storage server 500, the second storage server 600, and the like. The configuration of the management device 100 is described above.

### Functional Configuration of Streaming Server

Next, the configuration of the streaming server 300 is described while referencing FIG. 3.

As illustrated in FIG. 3, the streaming server 300 includes a storage 310, a controller 320, an input/output device 330, a communicator 340, and a system bus (not illustrated in the drawing) that connects these components to each other.

The storage 310 includes ROM, RAM, and the like. The ROM stores a program 311 executed by the controller 320, various types of data (not illustrated in the drawing) required in advance to execute the program 311, a video file to be distributed 312, and the viewing information 313.

The program 311 is a program for executing hereinafter described storage switching processing, and is stored in advance in the storage 310.

In one example, the video file to be distributed 312 is data that is obtained by encoding, in a streaming format, a video sent from a video camera at a game venue or a live venue.

The viewing information 313 is information expressing a viewing history of the video file to be distributed 312 by users and, in one example, includes a user name, a user ID, a target video file ID, a request date, and the like.

The controller 320 is configured from a CPU, an ASIC, or the like. The controller 320 operates in accordance with the program 311 stored in the storage 310, and executes processings according to the program 311. The controller 320 includes, as main functional components provided by the program 311 stored in the storage 310, a request receiver 321, a storage to use setter 322, and a content distributor 323.

The request receiver 321 is a functional component that receives, from the information terminal 200, a request by a user for video distribution. The request date includes, for example, the user name, the user ID, the target video file ID, the request date, and the like, and the request receiver 321 has a function for storing the received request information as the viewing information 313.

The storage to use setter 322 is a functional component that sets, on the basis of an instruction from the management device 100, the storage server to use. Specifically, the storage to use setter 322 sets the second storage server 600 as the storage server to use when an instruction for using the second storage server 600 is received from the management device 100, and, sets the first storage server 500 as the storage server to use when an instruction for using the first storage server 500 is received from the management device 100. Note that, as an initial setting, it is sufficient that the first storage server 500 is set as the storage server to use.

The content distributor 323 is a functional component that provides a video file for distribution that has been set for use by the storage to use setter 322 to provide video content, corresponding to the request of a user sent from the information terminal 200, to the user.

The input/output device 330 is a device that includes a keyboard, a mouse, a camera, a microphone, a liquid crystal display, an organic electro luminescence (EL) display, or the like, and is for inputting and outputting of various types of data.

The communicator 340 is a device that the streaming server 300 uses to communicate across the computer communication network 400 with other information terminals such as the management device 100, the information terminal 200, the first storage server 500, the second storage server 600, and the like. The configuration of streaming server 300 is described above.

### Operations

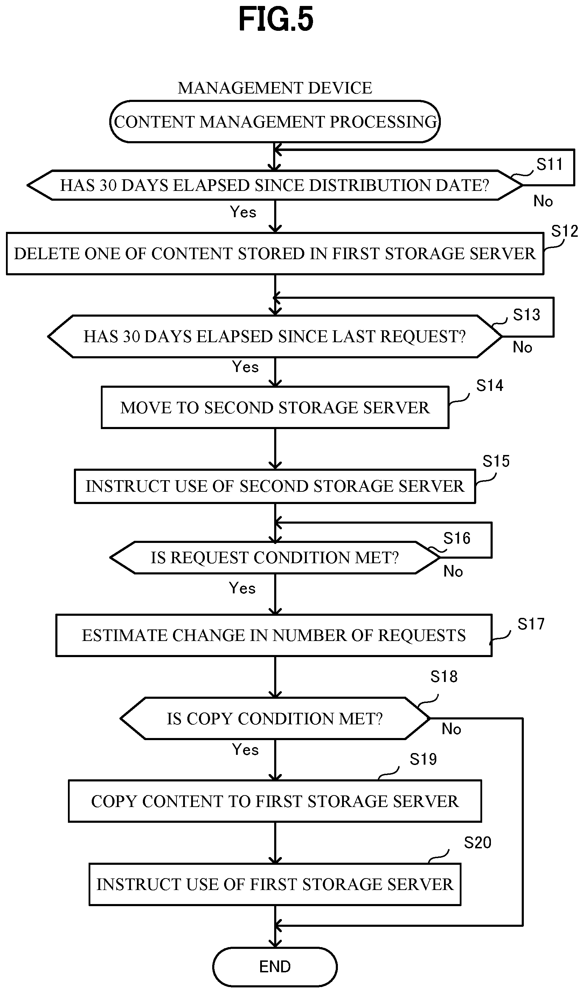

Next, the operations of the management device 100 are described. FIG. 5 is a flowchart illustrating an example of content management processing of the management device 100. Note that the content management processing may be executed for a plurality of contents or may be executed for each content. In this embodiment, an example is described in which the content management processing is executed for each content, and the video file to be distributed, that is, the video file to be managed is the content B. The content management processing is started upon the receipt of a notification from the streaming server 300 triggered by live streaming of the content B being performed. Additionally, as described above, the video distributed to the users by the live streaming of the content B is live-streamed from the streaming server 300 in real time, and is stored in the first storage server 500. The content management processing may be periodically executed at a predetermined time such as, for example, every day at midnight. When periodically executing the content management processing, the processing of steps S11 to S15 may be skipped in some cases.

When the content management processing starts, the controller 120 determines, by the function of the content mover/copier 122, whether 30 days have elapsed since the content B was live streamed (step S11). Specifically, in the processing of step S11, the content mover/copier 122 determines, using an internal timer, whether 30 days have elapsed since receiving, from the streaming server 300, a notification indicating that live streaming of the content B has started. Note that the number of elapsed days can be changed as desired. When, in the processing of step S11, a determination is made that 30 days has not elapsed (step S11; No), the controller 120 waits until 30 days have elapsed.

Meanwhile, when, in the processing of step S11, a determination is made that 30 days have elapsed (step S11; Yes), the controller 120 deletes, by the function of the content mover/copier 122, one of the two video files corresponding to the content B stored in the first storage server 500 (step S12). Specifically, in the processing of step S12, the content mover/copier 122 deletes, of the video files to be distributed stored in the first storage server 500, the video file to be distributed corresponding to the content B stored for backup.

After executing the processing of step S12, the controller 120 determines whether 30 days have elapsed since the last request from a user for the content B (step S13). Specifically, in the processing of step S13, the controller 120 acquires, by the function of the information acquirer 121 and from the streaming server 300, the request situation for video distribution from the users. Then, the controller 120 determines, by the function of the content mover/copier 122, that 30 days have elapsed since the last request for the content B when there have been no requests from any users even though 30 days have elapsed from the last request for the content B. When, in the processing of step S13, a determination is made that 30 days have not elapsed since the last request (step S13; No), the controller 120 waits until 30 days have elapsed. Note that the number of elapsed days can be changed as desired. The information acquirer 121 to acquire, from the streaming server 300, the request situation for video distribution from the users corresponds to an acquirer.

When, in the processing of step S13, a determination is made that 30 days have elapsed (step S13; Yes), the controller 120 moves, by the function of the content mover/copier 122, the video file to be distributed corresponding to the content B from the first storage server 500 to the second storage server 600 (step S14). Specifically, in the processing of step S14, the content mover/copier 122 copies, to the second storage server 600, the video file to be distributed that corresponds to the content B stored in the first storage server 500 and that was not deleted in the processing of step S12, and deletes that video file from the first storage server 500. As described above, although the first storage server 500 has a higher storage cost for the video files to be distributed than the second storage server 600, the first storage server 500 can handle large communication loads, and demonstrates fast communication speed. As such, the first storage server 500 is suitable for storing video files for which there are many requests from users. Additionally, although the second storage server 600 has a lower storage cost for the video files to be distributed than the first storage server 500, the second storage server 600 cannot handle large communication loads, and demonstrates slower communication speed. As such, the second storage server 600 is suitable for storing video files for which there are few requests from users. Accordingly, by executing the processing of step S14, it is possible to reduce the storage cost of the video file to be distributed corresponding to the content B for which the number of requests from users is few, and carry out management that takes management costs into account. The content mover/copier 122 to execute the processing of step S14 and step S14 respectively correspond to a mover and a moving step.

After executing the processing of step S14, the controller 120 instructs, by the function of the storage to use instructor 125, the streaming server 300 to use the second storage server 600 (step S15). Specifically, in the processing of step S 15, the storage to use instructor 125 instructs the streaming server 300 to use the second storage server 600 by sending, to the streaming server 300, instruction information indicating that the video file stored in the second storage server 600 is to be distributed. The use instructor 125 to execute the processing of step S15 corresponds to an instructor.

After executing the processing of step S15, the controller 120 determines whether the request condition is met (step S16). Specifically, in the processing of step S16, the controller 120 acquires, by the function of the information acquirer 121 and from the streaming server 300, the request situation for video distribution from the users. Then, on the basis of the acquired request situation for each content, the controller 120 determines, by the function of the number of requests estimator 123, whether the request condition is met, namely, whether the number of requests, among the number of requests corresponding to the content B, within the most recent one-hour is greater than or equal to 10. When, in the processing of step S16, a determination is made that the request condition is not met (step S16; No), the controller 120 waits until the request condition is met.

Meanwhile, when, in the processing of step S16, a determination is made that the request condition is met (step S16; Yes), the controller 120 performs, by the function of the number of requests estimator 123, an estimation of a future number of requests of the content B (step S17). Specifically, in the processing of step S17, the number of requests estimator 123 identifies, from the past data 112, the data (data of similar change) that has a change similar to the request situation of the content B, among the request situation for each content acquired by the information acquirer 121, and performs estimation of the future number of requests of the content B. When, for example, a sudden increase in the number of requests of the content B is expressed at the timing TA as illustrated in FIG. 7, a determination is made in the processing of step S16 that the request condition is met. Then, the number of requests estimator 123 determines, in the processing of step S17, that the change of the content B is similar to the change of the content A illustrated in FIG. 4, and determines that the number of requests of the content B will change as illustrated in FIG. 7 after the timing TA. Note that, as described above, the content B belongs to the specific sport genre of soccer and the content A also belongs to the specific sport genre of soccer and, as such, in this example, the number of requests estimator 123 performs the estimation of the future number of requests on the basis of the past data 112 corresponding to content of the same genre as the video file to be distributed. Alternatively, past data of a different genre may be used. Moreover, with regards to whether the change is similar, it is, for example, sufficient to determine that the change is similar when the change is within a predetermined range of error. Additionally, a configuration is possible in which a degree of matching with or a degree of similarity to the request change of the content B to-date is calculated, and changes for which the degree of matching or the degree of similarity is greater than or equal to a predetermined value are determined to be similar changes (changes that are similar). The number of requests estimator 123 to execute the processing of step S17 and step S17 respectively correspond to a request estimator and a request estimation step.

After executing the processing of step S17 of FIG. 5, the controller 120 determines, by the function of the content copy determiner 124, whether the copy condition, which is a condition that is met when management by the first storage server 500 results in lower management costs than management by the second storage server 600, is met (step S18). Specifically, in the processing of step S18, the content copy determiner 124 determines, on the basis of the change of the future number of requests of the content B estimated by the function of the number of requests estimator 123, whether management by the first storage server 500 results in lower management costs or management by the second storage server 600 results in lower management costs. The change of the future number of requests of the content B in this example is estimated on the basis of the past data 112 that has a similar change, that is, on the basis of the content A and, as described above, an example is described in which management of the past data 112 of the content A by the first storage server 500 results in lower management costs and, as such, a determination is made in step S18 that the copy condition is met. That is, in step S18, assuming, as the future change of the content B, the change in the content A that has a change similar to the content B, the content copy determiner 124 calculates the management costs for the first storage server 500 and the management costs for the second storage server 600, and determines that the management costs for the first storage server 500 are lower. Meanwhile, when the estimation of the future number of requests is carried out on the basis of the past data 112 of contents for which management costs for the second storage server 600 are lower, a determination is made in the processing of step S18 that the copy condition is not met. Note that the number of requests within one-hour, a request frequency, or the like may be set as the copy condition. Here, the management costs for the first storage server 500 may be calculated on the basis of a cost for storing the content on the first storage server 500, a cost for transmitting the content by the first storage server 500, and a cost for sending the content from the second storage server 600 to the first storage server 500. Additionally, the management costs for the second storage server 600 may be calculated on the basis of a cost for storing the content on the second storage server 600, and a cost for transmitting the content by the second storage server 600. The content copy determiner 124 to execute the processing of step S18 and step S18 respectively correspond to a determiner and a determination step.

When, in the processing of step S18, a determination is made that the copy condition is not met (step S18; No), the controller 120 ends the content management processing. Meanwhile, when, in the processing of step S18, a determination is made that the copy condition is met (step S18; Yes), the controller 120 copies, by the function of the content mover/copier 122, the video file to be distributed corresponding to the content B, moved in the processing of step S14, from the second storage server 600 to the first storage server 500 (step S19). Specifically, in the processing of step S 19, the content mover/copier 122 copies, to the first storage server 500, the video file to be distributed that corresponds to the content B stored in the second storage server 600 and that was moved in the processing of step S14. As described above, although the first storage server 500 has a higher storage cost for the video files to be distributed than the second storage server 600, the first storage server 500 can handle large communication loads, and demonstrates fast communication speed. As such, the first storage server 500 is suitable for storing video files for which there are many requests from users. Additionally, although the second storage server 600 has a lower storage cost for the video files to be distributed than the first storage server 500, the second storage server 600 cannot handle large communication loads and has slow communication speed. Moreover, if the second storage server 600 is configured so as to be able to handle a large communication load and/or have fast communication speed, the cost of the second storage server 600 would exceed the cost of the first storage server 500. As such, the second storage server 600 is suitable for storing video files for which there are few requests from users. Accordingly, by executing the processing of step S19, for the video file to be distributed of the content B for which the number of requests from users has increased, it is possible to handle a high communication load and perform video distribution of the content B to the users at suitable communication speed, and carry out management that takes management costs into account. Note that, in the processing of step S 19, it is possible to, by the function of the content mover/copier 122, not only copy, but also move the video file to be distributed corresponding to the content B, moved in the processing of step S14, from the second storage server 600 to the first storage server 500. That is, the video file may be deleted after the copying. The content mover/copier 122 to execute the processing of step S19 and step S19 respectively correspond to a manager and a management step.

After executing the processing of step S19, the controller 120 instructs, by the function of the storage to use instructor 125, the streaming server 300 to use the first storage server 500 (step S20), and ends the content management processing. Specifically, in the processing of step S20, the storage to use instructor 125 instructs the streaming server 300 to use the first storage server 500 by sending, to the streaming server 300, instruction information indicating that the video file of the content B that is copied in the processing of step S19 and that is stored in the first storage server 500, is to be distributed.

Note that a configuration is possible in which, after executing the processing of step S20, the processing of step S13 is executed, a determination is made whether 30 days have elapsed since the last request for the content B copied in the processing of step S19, and the processing of step S14 and thereafter is executed again. As a result, for content for which requests have suddenly increased, it is possible to reduce the storage cost of the video files in cases in which the requests decrease again, and it is possible to carry out management that takes management costs into account.

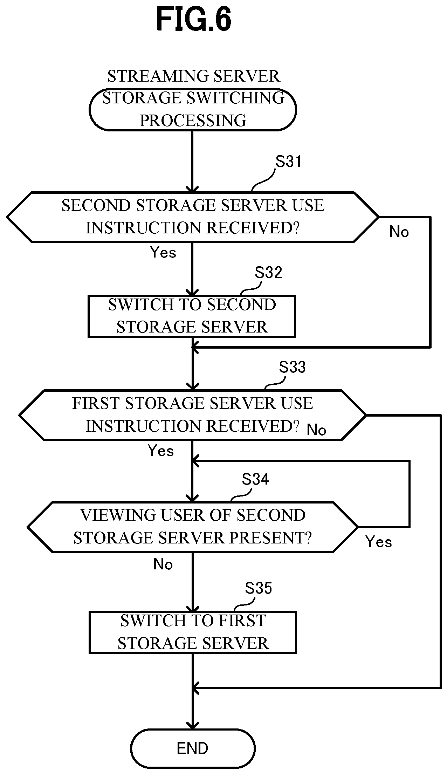

Next, the operations of the streaming server 300 are described. FIG. 6 is a flowchart illustrating an example of storage switching processing of the streaming server 300. Execution of the storage switching processing starts upon the receipt of the instruction information from the management device 100. Note that the execution of the storage switching processing may be started by an input operation by the user, or may be continued after being temporarily stopped. In such a case, it is sufficient to execute the processing of step S31 after the execution of the hereinafter described processing of step S35 or when a determination of No is made in the processing of step S33. Note that, in an initial setting, the first storage server 500 is set as the storage server to use.

When the storage switching processing illustrated in FIG. 6 starts, the controller 320 determines whether a second storage server use instruction for using the second storage server 600 is received from the management device 100 (step S31). Specifically, in the processing of step S31, the controller 320 determines whether the instruction information, indicating that the video file stored in the second storage server 600 is to be distributed, is received. More specifically, the controller 320 determines whether the instruction information, that is sent from the management device 100 by the processing of step S15 of FIG. 5 and that indicates that the video file stored in the second storage server 600 is to be distributed, is received.

When, in the processing of step S31 illustrated in FIG. 6, a determination is made that the second storage server use instruction is received (step S31; Yes), the controller 320 switches, by the function of the storage to use setter 322, the storage server to use to the second storage server 600 (step S32). Specifically, in the processing of step S32, the storage to use setter 322 switches the setting of the storage server to use from the first storage server 500 to the second storage server 600 so that video file stored in the second storage server 600 is to be distributed. That is, in the processing of step S32, the storage to use setter 322 switches the setting of the storage server to use from the first storage server 500 to the second storage server 600 so that the video file of the content B, moved to the second storage server 600 by the processing of step S14 of FIG. 5, is to be distributed. As a result, when a request, by a user, for video distribution of the content B is received by the function of the request receiver 321, video distribution of the content B stored in the second storage server 600 is carried out, by the function of the content distributor 323, in correspondence with that request.

After the execution of the processing of step S32 illustrated in FIG. 6 or in the processing of step S31, when a determination is made that the second storage server use instruction is not received (step S31; No), the controller 320 determines whether a first storage server use instruction for using the first storage server 500 is received from the management device 100 (step S33). Specifically, in the processing of step S33, the controller 320 determines whether instruction information, indicating that the video file stored in the first storage server 500 is to be distributed, is received. More specifically, the controller 320 determines whether the instruction information, that is sent from the management device 100 by the processing of step S20 of FIG. 5 and that indicates that the video file stored in the first storage server 500 is to be distributed, is received. When, in the processing of step S33 illustrated in FIG. 6, a determination is made that the first storage server use instruction is not received (step S33; No), the controller 320 ends the storage switching processing.

Meanwhile, when, in the processing of step S33, a determination is made that the first storage server use instruction is received (step S33; Yes), the controller 320 determines whether there is a user that is viewing the video distribution of the content B stored in the second storage server 600 (step S34). Specifically, in the processing of step S34, the controller 320 determines, by the function of the content distributor 323, whether there is a user viewing the video distribution of the content B stored in the second storage server 600, on the basis of whether the video file corresponding to the content B stored in the second storage server 600 is being distributed. Meanwhile, when, in the processing of step S34, a determination is made that there is a user viewing the video distribution of the content B stored in the second storage server 600 (step S34; Yes), that is, when the video file corresponding to the content B stored in the second storage server 600 is being distributed, the controller 320 waits until there is no longer a user viewing the video distribution of the content B stored in the second storage server 600. Specifically, whether there is a user that is viewing may be confirmed on the basis of the distribution, by the function of the content distributor 323, of the video file corresponding to the content B stored in the second storage server 600 having ended.

Meanwhile, when, in the processing of step S34, a determination is made that there are no users viewing the video distribution of the content B stored in the second storage server 600 (step S34; No), the controller 320 switches, by the function of the storage to use setter 322, the storage server to use to the first storage server 500 (step S35), and ends the storage switching processing. Specifically, in the processing of step S34, the storage to use setter 322 switches the setting of the storage server to use from the second storage server 600 to the first storage server 500 so that video file stored in the first storage server 500 is to be distributed. That is, in the processing of step S34, the storage to use setter 322 switches the setting of the storage server to use from the second storage server 600 to the first storage server 500 so that the video file of the content B, copied to the first storage server 500 by the processing of step S19 of FIG. 5, is to be distributed. As a result, when a request, by a user, for the video distribution of the content B is received by the function of the request receiver 321, video distribution of the content B stored in the first storage server 500 is carried out, by the function of the content distributor 323, in correspondence with that request.

Thus, the content management processing of the management device 100 and the storage switching processing of the streaming server 300 are performed and, as a result, the video files to be distributed that have few requests by users for video distribution are managed by the second storage server 600 that is a server suitable for the storage of video files that have few requests by users. Additionally, when the requests by users for video distribution suddenly increase, the future number of requests is estimated on the basis of the data to-date, and a determination is made as to which of management by the first storage server 500 and management by the second storage server 600 will result in reduced management costs. Moreover, when the management costs are lower for management by the first storage server 500, the video files to be distributed are copied to the first storage server 500, and managed by the first storage server 500 that is a server suitable for the storage of video files that have many requests from users.

FIG. 7 is an explanatory drawing illustrating an example of the change in the number of requests of the content B. As illustrated in FIG. 7, the number of requests gradually decreases from a timing T1 at which live streaming of the content B is carried out, and the last request is received at a timing T2. Moreover, when 30 days have elapsed since the last request, the processing of step S14 and step S15 of FIG. 5, and step S32 of FIG. 6 are executed and, at a timing T3 illustrated in FIG. 7, the storage server to use is switched from the first storage server 500 to the second storage server 600.

Then, when the processing of step S16 of FIG. 5 is executed at the timing TA illustrated in FIG. 7, a determination is made that the request condition is met. Next, in the processing of step S17, it is estimated that the change in the future number of requests of the content B will be the fluctuation and change of the content A illustrated in FIG. 4. Moreover, in the change in the number of requests of the content A illustrated in FIG. 4, an example illustrated in which, after the timing TQ, management by the first storage server 500 results in lower management costs and, as such, in the processing of step S18 of FIG. 5, a determination is made that the copy condition is met, and in the processing of step S19, the video file of the content B is copied to the first storage server 500. Due to this, the processing of step S20 of FIG. 5, and the processing of step S35 of FIG. 6 are executed and, at a timing T4 illustrated in FIG. 7, the storage server to use is switched from the second storage server 600 to the first storage server 500.

Then, upon a timing T6 at which 30 days has elapsed from a timing T5 illustrated in FIG. 7 at which the last request is received, the processing of step S14 and step S15 of FIG. 5, and the processing of step S32 of FIG. 6 are executed again. Then, at the timing T3 illustrated in FIG. 7, the storage server to use is switched from the first storage server 500 to the second storage server 600. Note that a configuration is possible in which the processing of step S14 and step S15 of FIG. 5, and the processing of step S32 of FIG. 6 are executed after the timing T5 passes but before the timing T6.

The operations of the management device 100 and the streaming server 300 are described above. As described above, according to the management device 100 of this embodiment, the processing of step S14 of FIG. 5 is executed and, as a result, the video files to be distributed are moved from the first storage server 500 to the second storage server 600. As such, is possible to reduce the storage costs of the video files to be distributed for which the number of requests from users is few, and carry out management that takes management costs into account. Additionally, the processing of step S19 is executed and, as a result, the video files to be distributed are moved from the second storage server 600 to the first storage server 500. As such, for the video files to be distributed for which the number of requests from users has increased, it is possible to handle a high communication load, perform video distribution to the users at suitable communication speeds, and carry out management that takes management costs into account.

According to the management device 100 of this embodiment, the processing of step S15 and step S20 of FIG. 5 is executed and, as a result, use instructions that take management costs into account are issued to the streaming server 300. Accordingly, it is possible to flexibly issue instructions about the storage server to use while taking the management costs of storage into account.

According to the management device 100 of this embodiment, in the processing of step S17 of FIG. 5, the number of requests estimator 123 identifies, from the past data 112, the data (data of similar change), of the request situation for each content acquired by the information acquirer 121, that has a change similar to the request situation of the content B, and performs estimation of the future number of requests of the content B. Accordingly, estimations of the future number of requests of the managed target video files can be performed in accordance with the past data, and it is possible to carry out management that is based on past data and that takes managements costs into account. Additionally, according to the management device 100 of this embodiment, when a determination is made in the processing of step S16 of FIG. 5 that the request condition is met, estimation of the number of requests is performed in the processing of step S17. Accordingly, it is not necessary to constantly perform estimations of the number of requests, and it is possible to reduce the processing load.

According to the management device 100 of this embodiment, in the processing of step S17 of FIG. 5, the number of requests estimator 123 performs estimation of the future number of requests on the basis of the past data 112 corresponding to content of the same genre as the video file to be distributed. Accordingly, estimations of the future number of requests of the managed target video files can be performed in accordance with the past data of the same genre, and it is possible to carry out management that is based on past data of the same genre and that takes managements costs into account.

### Modified Examples

The present disclosure is not limited to the embodiment described above, and various modifications and uses are possible. For example, a configuration is possible in which the management device 100 and/or the streaming server 300 according to the embodiment described above does not include all of the technical features described above. For example, the management device 100 and/or the streaming server 300 may include a portion of the features described above in the embodiment whereby at least one problem that exists in the related art can be solved. Additionally, at least a portion of each of the modified examples described below may be combined.

In the embodiment described above, in FIG. 7, an example is illustrated in which the change of the content B is similar to the change of the content A illustrated in FIG. 4. However, this is only an example. For example, a configuration is possible in which, in a case in which the actual number of requests of the content B changes by a number of requests less by a predetermined value or greater compared to the future change in the number of requests of the content B estimated in the processing of step S17 of FIG. 5, a limitation is implemented whereby a determination is not made that the copy condition is met in the processing of step S18 of FIG. 5. For example, a configuration is possible in which the number of requests in one-hour after the estimation of the future number of requests of the content B is acquired in the processing of step S17 of FIG. 5 is acquired and, in a case in which this number of requests is less by a predetermined value or greater compared to the future change in the number of requests of the content B estimated in the processing of step S17, a determination is made that the copy condition is met in the processing of step S18. With such a configuration, it is possible to change the storage server to use on the basis of changes in the actual number of requests, and more flexible management can be realized.

In addition, a configuration is possible in which the copy condition is a condition that differs for every video file to be distributed, that is, differs for every content genre. For example, in a case in which a video file to be distributed belongs to the sports genre of soccer, a determination is made that the copy condition is met when, in the change in the future number of requests of the content B estimated by the function of the number of requests estimator 123, management by the first storage server 500 results in lower management costs. Meanwhile, in a case in which a video file to be distributed belongs to the sports genre of baseball, in addition to the copy condition in the case of the sports genre of soccer, a determination is made that the copy condition is not met when the number of requests in one-hour after the estimation of the future number of requests is performed in the processing of step S17 of FIG. 5 is less by a predetermined value or greater compared to the future change in the number of requests estimated in the processing of step S17. With such a configuration, it is possible to flexibly manage the video files to be distributed for every sports genre.

In the embodiment described above, an example is described in which, in the processing of step S17 and step S18 of FIG. 5, data having a change that is similar to the request situation of the target content is identified from the past data 112 to perform the estimation of the future number of requests, and a determination is made whether management by the first storage server 500 results in lower management costs. However, this is only an example. A configuration is possible in which artificial intelligence (AI), for example, is used to machine learn the content of the past data 112 as a machine learning model, and the future number of requests of the target content is estimated using this machine learning model. Note that, the machine learning may be performed separately for each sport genre such as soccer, baseball, and the like. Moreover, the future number of requests may be estimated using machine learning models that have been trained for each genre. Additionally, a configuration is possible in which whether management by the first storage server 500 results in lower management costs is determined by a machine learning model using AI in which, among the changes in the number of requests expressed by the past data 112, the changes in the number of requests whereby management by the first storage server 500 results in lower management costs are used as teacher data. With such a configuration, it is possible to more flexibly manage the video files to be distributed. Note that, when estimating the future number of requests using AI in such a manner, the determination of whether the request condition is met in step S16 of FIG. 5 is skipped, and it is sufficient that the change in the future number of requests be periodically estimated using the AI in the processing of step S17. With such a configuration, it is possible to estimate the change in the future number of requests using a machine learning model, and estimation accuracy can be improved. Additionally, determination accuracy can be improved by using the machine learning model also for the determination of the management cost, that is, the determination of whether management by the first storage server 500 is appropriate.

In the embodiment described above, in the processing of step S16 of FIG. 5, a determination is made that the request condition is met when the number of requests within the most recent one-hour is 10 or greater, but this is only an example. A configuration is possible in which the request condition is a condition that differs for every video file to be distributed, that is, differs for every content genre. Additionally, a configuration is possible in which the request condition is a condition that differs in accordance with the date and time at which the live streaming was performed, even when the contents belong to the same genre. Moreover, a configuration is possible in which the request condition is a condition that differs in accordance with the specific sport, such as soccer or baseball, even when the contents belong to the same genre of sports. Furthermore, a configuration is possible in which, when the video files to be distributed are music, theatrical performance, or the like, the request condition differs in accordance with the performing artist. With such a configuration, it is possible to more flexibly manage the video files to be distributed.

A configuration is possible in which the management device 100 uses past review information and/or news information when estimating the request frequency. For example, in a case such as when a keyword corresponding to the stored content is temporarily used in review information and/or news information due to a seasonal reason or the like, there is a possibility that returning such content to the second storage server 600 will result in lower costs and, as such, the frequency may be set low. Additionally, when the keyword corresponding to the stored content is increasingly being used in the review information and/or the news information, the frequency may be set high.

In the embodiment described above, a case in which video files for backup are stored is described, but a configuration is possible in which video files for backup are not stored from the time of streaming.

Note that the management device 100 and the streaming server 300 according to the embodiment described above can be realized using a typical computer, without requiring a dedicated device. For example, the management device 100 that executes the processings described above can be realized by installing, on a computer, a program for executing any of the aforementioned, from a recording medium on which the program is stored. Additionally, a configuration is possible in which one management device 100 and streaming server 300 are realized by cooperatively operating a plurality of computers.

Additionally, in cases in which the functions described above are realized by being divided between an operating system (OS) and an application, or are realized by cooperation between an OS and an application, it is possible to store only the portion other than the OS on a medium.

Additionally, the programs can be piggybacked on carrier waves and distributed via a communication network. For example, the programs may be posted to a bulletin board system (BBS) on a communication network, and distributed via the network. Moreover, a configuration is possible in which the processings described above are executed by starting up these programs and, under the control of the operating system, executing the programs in the same manner as other applications/programs.

Hereinafter, various aspects of the present disclosure are recited as appendices.

### (Appendix 1)

A management device that manages a video file obtained by recording a live-streamed video, the management device comprising:
a mover to move, in a case in which the video file is stored in a first storage and, thereafter, a request from a user is not received within a predetermined period, the video file to a second storage different than the first storage;
a request estimator to estimate a change in a future request from the user for the video file after the video file is moved to the second storage by the mover;
a determiner to determine, based on respective management costs of the first storage and the second storage identified from the change in the future request from the user for the video file estimated by the request estimator, whether to store the video file in the first storage; and
a manager to, based on results of the determination by the determiner, store the video file in the first storage again, wherein
although a storage cost of the video file is higher for the first storage than for the second storage, a communication cost for the first storage is superior to that of the second storage.

### (Appendix 2)

The management device according to appendix 1, further comprising:
an instructor to instruct a streaming server about whether to set the video file stored in the first storage or in the second storage to be distributed, wherein
the instructor instructs the streaming server that the video file stored in the second storage is to be distributed in a case in which the video file is moved to the second storage by the mover, and instructs the streaming server that video file stored in the first storage is to be distributed in a case in which the video file is stored in the first storage again by the manager.

### (Appendix 3)

The management device according to appendix 1 or 2, further comprising:
an acquirer to acquire a request situation from the user, wherein
the request estimator estimates, based on, among the request situation from the user acquired by the acquirer, a past request situation of the video file similar to the request situation to-date of the video file, the change in the request from the user for the video file.

### (Appendix 4)

The management device according to appendix 3, wherein
the request estimator estimates the change in the request from the user for the video file when, among the request situation from the user acquired by the acquirer, the request situation for the video file within a predetermined period is a predetermined value or greater.

### (Appendix 5)

The management device according to appendix 3 or 4, wherein
the request estimator estimates, based on, among the request situation from the user acquired by the acquirer, a past request situation of the video file that is similar to the request situation to-date of the video file and that belongs to a category identical to a category to which the video file belongs, the change in the request from the user for the video file.

### (Appendix 6)

The management device according to appendix 1 or 2, further comprising:
an acquirer to acquire a request situation from the user, wherein
the request estimator estimates, based on the request situation from the user acquired by the acquirer, the change in the request from the user for the video file using a learning model machined-trained for each category to which the video file belongs.

### (Appendix 7)

The management device according to appendix 6, wherein
the determiner determines whether to store the video file in the first storage using a learning model in which, among the change in the request from the user expressed by the request situation from the user acquired by the acquirer, a change of the video file to be stored in the first storage is used as teaching data.

### (Appendix 8)

A management method executed by a management device that manages a video file obtained by recording a live-streamed video, the management method comprising:
a moving step of moving, in a case in which the video file is stored in a first storage and, thereafter, a request from a user is not received within a predetermined period, the video file to a second storage different than the first storage;
a request estimation step of estimating a change in a future request from the user for the video file after the video file is moved to the second storage in the moving step;
a determination step of determining, based on respective management costs of the first storage and the second storage identified from the change in the future request from the user for the video file estimated in the request estimation step, whether to store the video file in the first storage; and
a management step of, based on results of the determination in the determination step, storing the video file in the first storage again, wherein
although a storage cost of the video file is higher for the first storage than for the second storage, a communication cost for the first storage is superior to that of the second storage.

### (Appendix 9)

A program causing a management device that manages a video file obtained by recording a live-streamed video to function as:
a mover to move, in a case in which the video file is stored in a first storage and, thereafter, a request from a user is not received within a predetermined period, the video file to a second storage different than the first storage;
a request estimator to estimate a change in a future request from the user for the video file after the video file is moved to the second storage by the mover;
a determiner to determine, based on respective management costs of the first storage and the second storage identified from the change in the future request from the user for the video file estimated by the request estimator, whether to store the video file in the first storage; and
a manager to, based on results of the determination by the determiner, store the video file in the first storage again, wherein
although a storage cost of the video file is higher for the first storage than for the second storage, a communication cost for the first storage is superior to that of the second storage.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

According to the present disclosure, it is possible to provide a management device, a management method, and a program capable of flexibly managing video files to be distributed while taking into account storage cost.

## Claims

1. A management device (100) that manages a video file obtained by recording a live-streamed video, the management device (100) comprising:
a mover (122) to move, in a case in which the video file is stored in a first storage (500) and, thereafter, a request from a user is not received within a predetermined period, the video file to a second storage (600) different than the first storage (500);
a request estimator (123) to estimate a change in a future request from the user for the video file after the video file is moved to the second storage (600) by the mover (122);
a determiner (124) to determine, based on respective management costs of the first storage (500) and the second storage (600) identified from the change in the future request from the user for the video file estimated by the request estimator (123), whether to store the video file in the first storage (500); and
a manager (122) to, based on results of the determination by the determiner (124), store the video file in the first storage (500) again, wherein
although a storage cost of the video file is higher for the first storage (500) than for the second storage (600), a communication cost for the first storage (500) is superior to that of the second storage (600).

2. The management device (100) according to claim 1, further comprising:
an instructor (125) to instruct a streaming server (300) about whether to set the video file stored in the first storage (500) or in the second storage (600) to be distributed, wherein
the instructor (125) instructs the streaming server (300) that the video file stored in the second storage (600) is to be distributed in a case in which the video file is moved to the second storage (600) by the mover (122), and instructs the streaming server (300) that video file stored in the first storage (500) is to be distributed in a case in which the video file is stored in the first storage (500) again by the manager (122).

3. The management device (100) according to claim 1 or 2, further comprising:
an acquirer (121) to acquire a request situation from the user, wherein
the request estimator (123) estimates, based on, among the request situation from the user acquired by the acquirer (121), a past request situation (112) of the video file similar to the request situation to-date of the video file, the change in the request from the user for the video file.

4. The management device (100) according to claim 3, wherein
the request estimator (123) estimates the change in the request from the user for the video file when, among the request situation from the user acquired by the acquirer (121), the request situation for the video file within a predetermined period is a predetermined value or greater.

5. The management device (100) according to claim 3 or 4, wherein
the request estimator (123) estimates, based on, among the request situation from the user acquired by the acquirer (121), a past request situation (112) of the video file that is similar to the request situation to-date of the video file and that belongs to a category identical to a category to which the video file belongs, the change in the request from the user for the video file.

6. The management device (100) according to claim 1 or 2, further comprising:
an acquirer (121) to acquire a request situation from the user, wherein
the request estimator (123) estimates, based on the request situation from the user acquired by the acquirer (121), the change in the request from the user for the video file using a learning model machined-trained for each category to which the video file belongs.

7. The management device (100) according to claim 6, wherein
the determiner (124) determines whether to store the video file in the first storage (500) using a learning model in which, among the change in the request from the user expressed by the request situation from the user acquired by the acquirer (121), a change of the video file to be stored in the first storage (500) is used as teaching data.

8. A management method executed by a management device (100) that manages a video file obtained by recording a live-streamed video, the management method comprising:
a moving step (S14) of moving, in a case in which the video file is stored in a first storage (500) and, thereafter, a request from a user is not received within a predetermined period, the video file to a second storage (600) different than the first storage (500);
a request estimation step (S16) of estimating a change in a future request from the user for the video file after the video file is moved to the second storage (600) in the moving step (S14);
a determination step (S18) of determining, based on respective management costs of the first storage (500) and the second storage (600) identified from the change in the future request from the user for the video file estimated in the request estimation step (S16), whether to store the video file in the first storage (500); and
a management step (S19) of, based on results of the determination in the determination step (S18), storing the video file in the first storage (500) again, wherein
although a storage cost of the video file is higher for the first storage (500) than for the second storage (600), a communication cost for the first storage (500) is superior to that of the second storage (600).

9. A program causing a management device (100) that manages a video file obtained by recording a live-streamed video to function as:
a mover (122) to move, in a case in which the video file is stored in a first storage (500) and, thereafter, a request from a user is not received within a predetermined period, the video file to a second storage (600) different than the first storage (500);
a request estimator (123) to estimate a change in a future request from the user for the video file after the video file is moved to the second storage (600) by the mover (122);
a determiner (124) to determine, based on respective management costs of the first storage (500) and the second storage (600) identified from the change in the future request from the user for the video file estimated by the request estimator (123), whether to store the video file in the first storage (500); and
a manager (122) to, based on results of the determination by the determiner (124), store the video file in the first storage (500) again, wherein
although a storage cost of the video file is higher for the first storage (500) than for the second storage (600), a communication cost for the first storage (500) is superior to that of the second storage (600).
